(19) Europäisches Patentamt

European Patent Office

Office européen des brevets

(11) Veröffentlichungsnummer: **0 465 962 A1**

## (12) EUROPÄISCHE PATENTANMELDUNG

(21) Anmeldenummer: **91110810.8**

(22) Anmeldetag: **29.06.91**

(51) Int. Cl.⁵: **F01C 19/04**

(30) Priorität: **09.07.90 US 549844**

(43) Veröffentlichungstag der Anmeldung:
**15.01.92 Patentblatt 92/03**

(84) Benannte Vertragsstaaten:
**DE FR GB IT**

(71) Anmelder: **DEERE & COMPANY**
**1 John Deere Road**
**Moline, Illinois 61265(US)**

(72) Erfinder: **Keleher, Daniel Bradley**
**3940 Aspen Hills Drive**
**Bettendorf, Iowa 52722(US)**

(74) Vertreter: **Feldmann, Bernhard et al**
**DEERE & COMPANY European Office Patent**
**Department Steubenstrasse 36-42**
**W-6800 Mannheim 1(DE)**

(54) **Dichtleistenanordnung für eine Drehkolbenverbrennungsmaschine.**

㊗ Zur Verbesserung der Verschleißfestigkeit der Dichtung ist die Lage der Grenzfläche so gewählt, daß sie vollständig radial außerhalb und beabstandet zu der äußeren Oberfläche des Eckendichtungsteils (72) liegt, so daß der zwischen dem Dichtungsteil (52) und dem Stützteil (54) liegende Grenzflächenbereich nicht mit dem Eckendichtungsteil (72) und der Kante der Eckendichtungsausnehmung (70) in Eingriff treten kann, wenn das Stützteil (54) und das Dichtungsteil (52) sich radial in dem Schlitz (74) bewegen. Die Rotormittellinie (A) und die hierzu geneigte Mittellinie (B) der Dichtleistennut (50) schneiden sich in einem Schnittpunkt (P), der in der Nähe der äußeren Dichtungsfläche des Dichtungsteils (52) liegt. Der Krümmungsmittelpunkt (C) der Dichtungsfläche liegt auf der Rotormittellinie (A). Der Schnittpunkt (P) befindet sich näher an der äußeren Oberfläche des Dichtungsteils (52) als an dem Krümmungsmittelpunkt (C).

Fig. 3

Die Erfindung betrifft eine Dichtleistenanordnung für eine Drehkolbenverbrennungsmaschine mit einem mehreckigen Rotor, in dem sich wenigstens eine Dichtleistennut und wenigstens eine Eckendichtungsausnehmung befinden, die ein äußeres Dichtungsteil und ein inneres Stützteil aufnehmen, wobei das Dichtungsteil und das Stützteil eine gemeinsame Grenzfläche aufweisen, die gegenüber der Drehrichtung des Rotors geneigt ist. Die Eckendichtungsausnehmung nimmt ferner ein Eckendichtungsteil mit einer zylindrischen äußeren Oberfläche auf, die einen Schlitz zur Aufnahme eines Teils der Dichtungsanordnung enthält.

Dichtleisten für Drehkolbenmaschinen verschleißen schnell und begrenzen damit die Lebensdauer der Maschine. Es wurden viele Versuche unternommen, den Verschleiß der Dichtleisten zu reduzieren, indem eine geringere Reibung und/oder ein verschleißfesteres Material angewendet wurde und die Faktoren und Kräfte, die zum Verschleiß beitragen, verringert wurden.

Dichtleisten sind zum Beispiel durch die US-PS 3,124,439, US-PS 3,269,369, US-PS 3,853,438 und US-PS 4,056,338 bekannt geworden. Es wurden auch vielteilige Dichtleisten durch die US-PS 4,317,648 und US-PS 4,358,259 vorgeschlagen. Diese Dichtleisten erfüllen jedoch nicht die hohen Anforderungen an die Verschleißfestigkeit, die bei den hohen Drehzahlen und Umgebungstemperaturen einer turbogeladenen Drehkolbenmaschine mit Schichtladung erfüllt werden müssen.

Die mit der Erfindung zu lösende Aufgabe wird darin gesehen, eine vielteilige Dichtleistenanordnung der eingangs genannten Art mit verbesserter Verschleißfestigkeit anzugeben. Der Eingriff zwischen der Dichtleiste und der Lauffläche des Rotorgehäuses soll lückenlos aufrechterhalten werden können.

Die Aufgabe wird erfindungsgemäß dadurch gelöst, daß die Grenzfläche vollständig radial außerhalb und beabstandet zu der äußeren Oberfläche des Eckendichtungsteils liegt, so daß der zwischen dem Dichtungsteil und dem Stützteil liegende Grenzflächenbereich nicht mit dem Eckendichtungsteil und der Kante der Eckendichtungsausnehmung in Eingriff treten kann, wenn das Stützteil und das Dichtungsteil sich radial in dem Schlitz bewegen.

Vorzugsweise ist die Mittellinie der Dichtleistennut gegenüber der durch die Rotorscheitellinie verlaufenden Rotormittellinie geneigt. Die Rotormittellinie und die Mittellinie der Dichtleistennut schneiden sich zweckmäßigerweise in einem Schnittpunkt, der in der Nähe der äußeren Dichtungsfläche des Dichtungsteils liegt. Dabei ist es von Vorteil, wenn das Dichtungsteil eine äußere gekrümmte Dichtfläche aufweist, deren Krümmungsmittelpunkt auf der Rotormittellinie liegt, und wenn der genannte Schnittpunkt näher an der äußeren Oberfläche des Dichtungsteils als an dem Krümmungsmittelpunkt liegt.

Gemäß einer vorteilhaften Weiterbildung der Erfindung enthält die Dichtungsanordnung wenigstens ein Enddichtungsteil, welches an einem Ende des äußeren Dichtungsteils sowie des inneren Stützteils angreift, wobei das Enddichtungsteil teilweise von der Dichtleistennut und teilweise von der Eckendichtungsausnehmung aufgenommen wird.

Eine weitere bevorzugte Weiterbildung der Erfindung sieht vor, daß das Eckendichtungsteil eine zentrale Öffnung aufweist, die einen massiven, zylindrischen, elastischen Einsatz aufnimmt, wobei eine äußere Fläche des Einsatzes mit einem Dichtungsteil in Eingriff bringbar ist. Bei diesem Dichtungsteil handelt es sich vorzugsweise um ein Enddichtungsteil.

Bevorzugte mehrteilige Dichtleistenanordnungen sind in Nuten, die sich im Scheitelbereich jeder Rotorecke befinden, jeweils zwischen einem Paar beidseitiger Eckendichtungsausnehmungen eingesetzt. Jede Dichtleistenanordnung umfaßt ein äußeres Dichtungsteil, ein inneres Stützteil, ein Paar von Seiten- oder Enddichtungsteilen ein Paar von hohlen, zylindrischen, geschlitzten Eckendichtungsteilen, die von den Eckendichtungsausnehmungen aufgenommen werden, ein Paar massiver, zylindrischer, elastischer Einsätze, die in die Eckendichtungsteile eingesetzt sind und ein Paar von unter den Dichtungsteilen angeordneten Federn, die die Dichtungsteile nach außen gegen die Lauffläche des Rotorgehäuses drücken.

Die Dichtleiste und ihre Nut sind gegenüber der durch die Rotorkante verlaufenden Mittellinie des Rotors geneigt, um die Dichtleiste und die Nut genau auf die Gegenkraft der Trochiode der Lauffläche auszurichten. Hierdurch wird die Rückfederung und die Fähigkeit der Dichtleiste, mit der Lauffläche in Kontakt zu bleiben, verbessert. Durch die Schrägstellung der Dichtleiste lassen sich ferner die Dichtleiste und die Nut genau auf die Richtung der Wechselwirkungskräfte des Dichtgehäuses einstellen, wenn die Dichtleiste höchsten Beanspruchungen ausgesetzt ist. Auf diese Weise lassen sich die Kräfte vermindern, die die Fähigkeit der Dichtleiste, den Kontakt mit der Lauffläche aufrechtzuerhalten, stören.

Die Dichtleiste ist derart geneigt und ausgerichtet und ihre äußere Oberflächenkrümmung ist so gestaltet, daß sich bei im Gehäuse drehendem Rotor der Berührungspunkt zwischen der äußeren Dichtungsoberfläche der Dichtleiste und der Lauffläche des Rotorgehäuses auf der äußeren Dichtungsoberfläche innerhalb eines Bereiches bewegt, der im wesentlichen symmetrisch in bezug auf die Mittellinie der Rotorecke liegt.

Die Dichtungs- und Stützteile enthalten aufeinander abgestimmte geneigte Flächen, durch die eine Grenzfläche gebildet wird, die radial nach innen entgegen der Drehrichtung des Rotors geneigt ist. Diese Grenzfläche liegt mit Zwischenraum vollständig außerhalb der äußeren Zylinderfläche der Eckendichtungsteile, so daß die Kanten der geneigten Flächen vor einem Verhaken mit den Eckendichtungsteilen oder mit dem Rotor geschützt sind. Da das obere Teil kleiner sein kann, ist seine Stabsteifigkeit vermindert, wodurch sich die Dichtung besser an das Gehäuse anpaßt und die Temperaturdifferenz zwischen der Ober- und Unterkante gering ist. Hierdurch wird die Neigung zu thermischen Verformungen vermindert. Die (wegen der verminderten Dichtungsdicke, Dichtungshöhe und der kleineren Federn) geringere Masse dieser Dichtleistenanordnung verdoppelt nahezu die Eigenfrequenz des Feder-Masse-Systems im Vergleich mit bisherigen Konstruktionen, wenn auch die unter den Dichtungsteilen angeordneten Federn kleiner sind und eine geringere Vorspannung an die Dichtung anlegen.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:

Fig. 1     die vereinfachte Querschnittsdarstellung einer Drehkolbenverbrennungsmaschine mit erfindungsgemäßen Dichtleistenanordnungen,

Fig. 2     den Teilschnitt der erfindungsgemäßen Dichtleistenanordnung mit Blick in die Drehrichtung des Rotors,

Fig. 3     die Seitenansicht in Richtung 3 - 3 der Fig. 2 und

Fig. 4     einen Schnitt entlang der Linie 4 - 4 der Fig. 2.

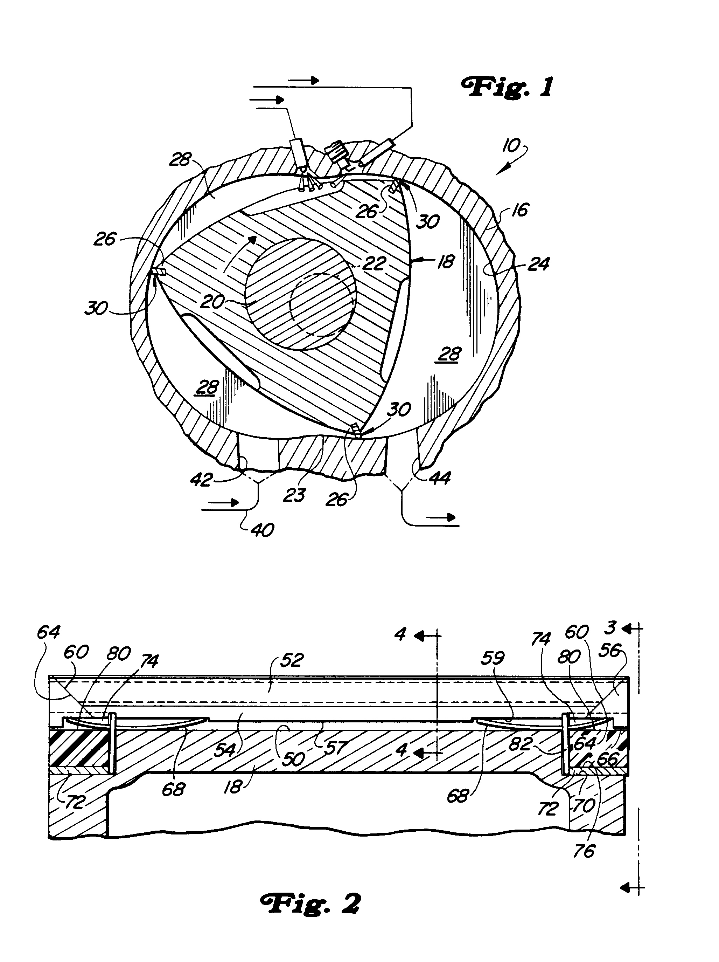

Die schematisch in Fig. 1 dargestellte Drehkolbenverbrennungsmaschine 10 enthält ein äußeres Gehäuse, welches aus zwei axial zueinander beabstandeten, nicht dargestellten Endgehäuseteilen und einem Zwischen- oder Rotorgehäuse 16 besteht. Die Gehäuseteile sind miteinander verbunden und schließen den Maschinenhohlraum ein. Ein innerer Körper oder Rotor 18 ist drehbar in dem Maschinenhohlraum auf dem Exzenterteil 20 einer Welle 22 gelagert. Die Welle 22 wird durch nicht gezeigte Lager in den Endgehäuseteilen gelagert. Die Achse der Welle 22 ist senkrecht zu den nicht gezeigten Endgehäusen ausgerichtet.

Die umlaufende Kammerinnenwandung oder Lauffläche 24 des Rotorgehäuses 16 weist einen Querschnitt mit zwei Ausbuchtungen auf, welcher grundsätzlich eine Epitrochoide darstellt. Der Rotor 18 hat einen im wesentlichen dreieckigen Querschnitt mit Scheitelbereichen 26, die in dichtendem Eingriff mit der Epitrochoidefläche 24 stehen und drei Arbeitsräume 28 der Verbrennungsmaschine 10 zwischen dem Rotor 18, den Endgehäuseteilen und dem Rotorgehäuse 16 bilden. Jeder der Scheitelbereiche 26 des Rotors 18 nimmt eine erfindungsgemäße Dichtleistenanordnung 30 auf, die sich längs des Rotors 18 zwischen den beiden Endgehäuseteilen erstrecken. Der Rotor 18 weist ferner geeignete, nicht dargestellte Öldichtungen an seinen Stirnseiten auf, die an den Innenflächen der Endgehäuseteile anliegen.

Die Maschine 10 enthält ferner übliche, nicht dargestellte Getriebeteile zwischen Rotor 18 und dem Maschinengehäuse, durch die die relative Drehung des Rotors 18 gesteuert wird. Ferner enthält die Maschine 10 einen Lufteintrittskanal 40, über den Luft zu einer Lufteintrittsöffnung 42 geleitet wird, und eine Abgasaustrittsöffnung 44.

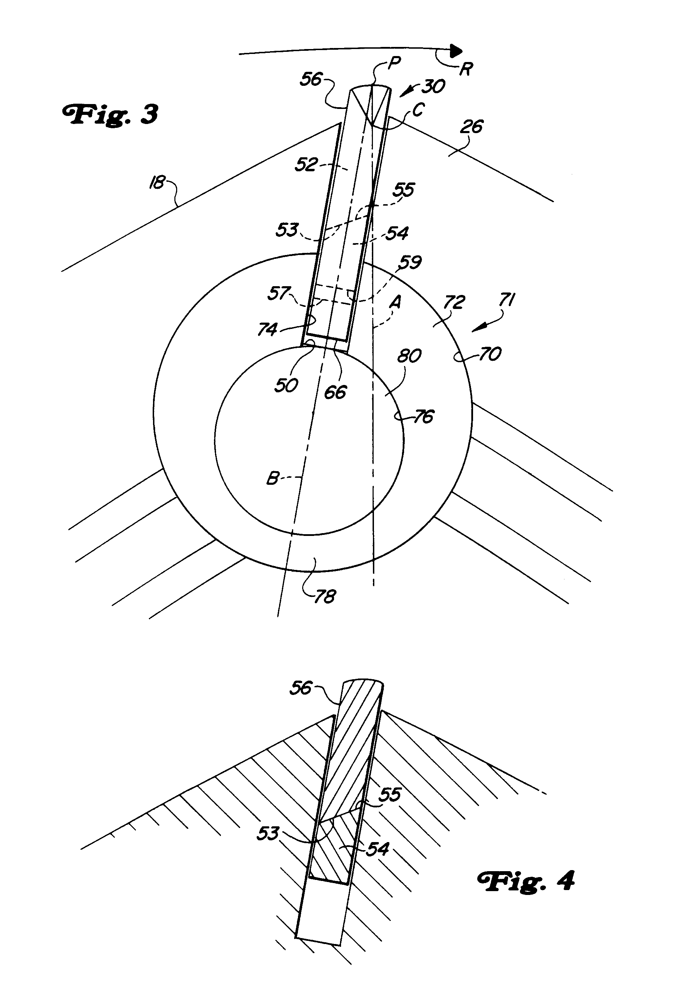

Wie aus den Figuren 2 und 3 hervorgeht, enthält jeder Scheitelbereich des Rotors 18 eine sich axial erstreckende Dichtleistennut 50 zur Aufnahme der Dichtleistenanordnung 30. Die Dichtleistenanordnung 30 enthält ein längliches äußeres Dichtungsteil 52, ein längliches inneres Stützteil 54 und ein Paar von Seiten- oder Endteilen 56. Die Dichtungs- und Stützteile 52 und 54 sind in der Dichtleistennut 50 in sich überlappender oder übereinanderliegender Weise eingesetzt. Jedes Seitenteil 56 weist eine schräge Stirnfläche 60 auf, die in entsprechende schräge Flächen an den sich gegenüberliegenden Enden der Dichtungs- und Tragteile 52 und 54 eingreifen. Jedes Seitenteil 56 hat ferner einen vorstehenden Ansatz 66, der an den Enden des Seitenteils radial nach innen weist. Ein Paar Blattfedern 68 sind in der Dichtleistennut 50 befestigt. Ein Ende jeder Blattfeder 68 greift an der Unterseite eines der Seitenteile 56 in der Nähe des Ansatzes 66 an. Das andere Ende der Blattfeder 68 greift an einer zwischen den Unterseiten 57 und 59 des Stützteils 54 liegenden Schulter an.

Der mittlere Bereich der Blattfeder 68 liegt auf dem Grund der Dichtleistennut 50 auf. Auf diese Weise werden die Dichtungsteile 52, 54 federnd gegen die Lauffläche 24 des Rotorgehäuses gedrückt. Die Dichtungsteile sind vorzugsweise mit "Dicronite" beschichtet, um die Reibung während der kritischen Einlaufphase zu vermindern.

Das Stützteil 54 verhindert, daß der hohe Druck in der Verbrennungskammer vollständig unter die Dichtleiste gelangt. Da die Teile 52, 54 dünner sind als bei üblichen Konstruktionen, wirkt der Druck, der unter die Dichtungsteile gelangt, auf eine kleinere Fläche, wodurch die Druckbeanspruchung vermindert wird. Das Dichtungsteil 52, das dünner als bei üblichen Konstruktionen ist, weist eine geringere Fläche auf, auf die der hohe Druck wirken kann, um das Dichtungsteil 52 von der Lauffläche 24 abzuheben. Hierdurch wird die Kammerabdichtung verbessert. Da ferner die Höhe des Dichtungsteils 52 geringer ist als bei üblichen Konstruktionen, ist die Fläche, auf die der Druck wirken kann, um das Dichtungsteil 52 gegen die Seite der Dichtleistennut 50 zu drücken, vermindert. Hierdurch wird auch die Reibungskraft vermindert, die die radiale Bewegung der Dichtung beeinflußt, was ebenfalls zu einer Verbesserung der Anschmiegung zwischen Dichtungsteil 52 und Lauffläche 24 führt.

Wie am besten aus Fig. 3 ersichtlich, schneiden sich die durch die Rotorkante gehende Rotormittellinie A und die Mittellinie B der Dichtungs- und Stützteile 52, 54 in einem Punkt P. Das Dichtungsteil 52 weist eine äußere Dichtfläche auf, deren Krümmungsmittelpunkt C auf der Mittellinie A der Rotorkante liegt. Der Schnittpunkt P befindet sich auf oder nahe bei der äußeren Fläche des Dichtungsteils 52 und damit näher bei der äußeren Fläche als beim Krümmungsmittelpunkt C. Mit dieser Anordnung bewegt sich bei im Gehäuse 16 umlaufendem Rotor 18 der Berührungspunkt zwischen der äußeren Dichtfläche und der Lauffläche 24 auf der äußeren Dichtfläche innerhalb eines Bereiches, der im wesentlichen symmetrisch zu der Mittellinie A der Rotorkante liegt.

Wie ebenfalls aus Fig. 3 hervorgeht, haben die Dichtungs- und Stützteile 52 und 54 schräge Flächen 53 bzw. 55, die sich aneinander anschmiegen und eine schräge Berührungsfläche bilden. Der Pfeil R zeigt die Richtung der Rotordrehung an. Es ist somit ersichtlich, daß die Anlaufkante der Berührungsfläche radial weiter außen liegt als die hintere Kante der Berührungsfläche. Somit werden die Dichtungs- und Stützteile 52, 54 durch die Wirkung der Blattfedern 68 in Richtung Lauffläche 24 des Rotorgehäuses 16 gedrückt, und eine seitliche Kraft wird erzeugt, die das Dichtungsteil 52 zu einer Seite der Dichtleistennut 50 und das Stützteil 54 zu der anderen Seite der Dichtleistennut 50 treibt. Die durch die Flächen 53 und 55 gebildete Berührungsfläche liegt vollständig außerhalb der äußeren zylindrischen Fläche der Eckendichtungsteile 72. Hierdurch wird verhindert, daß die Kanten der Flächen 53 und 55 in die äußeren Kanten des Eckendichtungsteils 72 am äußeren Ende des Schlitzes 74 oder an dem Rotor 18 an dessen Schnittlinie zwischen Dichtleistennut 50 und der Ausnehmung 70 eingreifen. Somit ist sichergestellt, daß sich die Dichtungs- und Stützteile 52 und 54 ungehindert radial in die Dichtleistennut 50 hinein und aus ihr heraus bewegen können.

Der Rotor weist an den gegenüberliegenden Seiten der Dichtleistennut 50 Ausnehmungen 70 zur Aufnahme von Eckendichtungen 71 auf. Jede Eckendichtung 71 enthält ein zylindrisches in der Ausnehmung 70 befestigtes Eckendichtungsteil 72. Das Eckendichtungsteil 72 hat einen sich längs erstreckenden Schlitz 74 und eine kreisförmige Öffnung 76, welche in bezug auf die zylindrische äußere Oberfläche des Eckendichtungsteils 72 exzentrisch liegt, wodurch sich ein dünner federnder Bereich 78 des Eckendichtungsteils 72 an der dem Schlitz 74 gegenüberliegenden Seite ausbildet. Auf diese Weise besitzt das Eckendichtungsteil 72 eine radiale Elastizität und ist in der Ausnehmung so angeordnet, daß es die Fähigkeit hat, sich radial nach außen aufzuweiten. Hierdurch ergibt sich ein enger Kontakt zwischen der äußeren Fläche des Eckendichtungsteils 72 und der Ausnehmung 70, wodurch eine zuverlässige Dichtung gegeben ist. Das Stützteil 54 und die Seitenteile 56 werden auf beiden Seiten durch den Schlitz 74 des Eckendichtungsteils 72 aufgenommen. Das Dichtungsteil 52 wird nicht durch den Schlitz 74 des Eckendichtungsteils 72 aufgenommen, sondern greift nur in der Dichtleistennut 50 des Rotors 18 ein, wodurch die Gefahr eines Einklemmens zwischen der Dichtleistennut 50 des Rotors 18 und dem Schlitz 74 infolge einer falschen Ausrichtung vermieden wird. Ferner ist der Schlitz 74 breiter als die Dichtleistennut 50, so daß ein Einklemmen des Stützteils 54 und der Seitenteile 56 infolge einer falschen Ausrichtung der Schlitze vermieden wird. Ein massiver zylindrischer Einsatz 80, der vorzugsweise aus einem elastischen Material wie "Viton" besteht, ist in der Öffnung 76 angeordnet, so daß er mit dem nach innen weisenden Ende des Ansatzes 66 in Eingriff bringbar ist. Der elastische Einsatz 80 ermöglicht dem Eckendichtungsteil 72 eine höhere Flexibilität und eine bessere Dichtung in seiner Ausnehmung. Der Einsatz 80 enthält keinen Schlitz und läßt sich somit leichter fertigen als konventionelle geschlitzte Einsätze. Eine Eckendichtungsfeder 82 ist in jeder Ausnehmung 70 angeordnet und drückt die Eckendichtungsteile 72 voneinander weg und gegen die nicht dargestellten Endgehäuseteile. Zur Vereinfachung der Herstellung erfordern die Dichtungsteile lediglich gerade maschinell herstellbare Schnitte. Die Dichtleistennut 50 des Rotors 18 ist gerade und viel weniger tief als bei bisherigen Ausführungen üblich. Vorzugsweise sind die Kanten an den Schlitzöffnungen nicht mit Fasen versehen, die die Stützweite der Kontaktpunkte zwischen Dichtung und Schlitz vermindern. Um ein Absplittern der Kanten zu vermeiden, sind diese jedoch mit Radien versehen.

Auch wenn die Erfindung lediglich an Hand eines Ausführungsbeispieles beschrieben wurde, erschließen sich für den Fachmann im Lichte der vorstehenden Beschreibung viele verschiedenartige Alternativen, Modifikationen und Varianten, die unter die vorliegende Erfindung fallen.

**Patentansprüche**

1. Dichtleistenanordnung für eine Drehkolbenverbrennungsmaschine (10) mit einem mehreckigen Rotor (18), in dem sich wenigstens eine Dichtleistennut (50) und wenigstens eine Eckendichtungsausnehmung (70) befinden, die ein äußeres Dichtungsteil (52) und ein inneres Stützteil (54) aufnehmen, wobei das Dichtungsteil (52) und das Stützteil (54) eine gemeinsame Grenzfläche aufweisen, die gegenüber der Drehrichtung des Rotors (18) geneigt ist, und deren Eckendichtungsausnehmung (70) ein Eckendichtungsteil (72) mit einer zylindrischen äußeren Oberfläche aufnimmt, die einen Schlitz (74) zur Aufnahme eines Teils der Dichtungsanordnung enthält, dadurch gekennzeichnet, daß die Grenzfläche vollständig radial außerhalb und beabstandet zu der äußeren Oberfläche des Eckendichtungsteils (72) liegt, so daß zwischen dem Dichtungsteil (52) und dem Stützteil (54) liegende Grenzflächenbereiche nicht mit dem Eckendichtungsteil (72) und der Kante der Eckendichtungsausnehmung (70) in Eingriff treten können, wenn das Stützteil (54) und das Dichtungsteil (52) sich radial im Schlitz (74) bewegen.

2. Dichtleistenanordnung nach Anspruch 1, dadurch gekennzeichnet, daß die Mittellinie (B) der Dichtleistennut (50) gegenüber der durch die Rotorscheitellinie, in der die Leistennut (50) liegt, verlaufenden Rotormittellinie (A) geneigt ist.

3. Dichtleistenanordnung nach Anspruch 2, dadurch gekennzeichnet, daß die Rotormittellinie (A) und die Mittellinie (B) der Dichtleistennut (50) sich in einem Schnittpunkt (P) schneiden, der in der Nähe der äußeren Dichtungsfläche des Dichtungsteils (52) liegt.

4. Dichtleistenanordnung nach Anspruch 3, dadurch gekennzeichnet, daß das Dichtungsteil (52) eine gekrümmte äußere Dichtfläche aufweist, deren Krümmungsmittelpunkt (C) auf der Rotormittellinie (A) liegt, und daß der Schnittpunkt (P) näher an der äußeren Oberfläche des Dichtungsteils (52) als an dem Krümmungsmittelpunkt (C) liegt.

5. Dichtleistenanordnung nach einem der Ansprüche 1 bis 4, dadurch gekennzeichnet, daß die Dichtungsanordnung wenigstens ein Enddichtungsteil (56) enthält, welches an einem Ende des äußeren Dichtungsteils (52) und einem Ende des inneren Stützteils (54) angreift, wobei das Enddichtungsteil (56) teilweise von der Dichtleistennut (50) und teilweise von der Eckendichtungsausnehmung (70) aufgenommen wird.

6. Dichtleistenanordnung nach einem der Ansprüche 1 bis 5, dadurch gekennzeichnet, daß das Eckendichtungsteil (72) eine zentrale Öffnung (76) aufweist, die einen massiven, zylindrischen, elastischen Einsatz (80) aufnimmt, wobei eine äußere Fläche des Einsatzes (80) mit einem Dichtungsteil in Eingriff bringbar ist.

7. Dichtleistenanordnung nach Anspruch 6, dadurch gekennzeichnet, daß die äußere Fläche des Einsatzes (80) mit einem Enddichtungsteil (56) in Eingriff bringbar ist.

Fig. 1

Fig. 2

*Fig. 3*

*Fig. 4*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-4 317 648 (SHIMIZU ET AL.)<br>* das ganze Dokument* *<br>– – – | 1,5-7 | F 01 C 19/04 |
| D,A | US-A-4 358 259 (MORITA)<br>* das ganze Dokument * *<br>– – – | 1 | |
| D,A | US-A-3 853 438 (SATO)<br>* das ganze dokument * *<br>– – – | 2-4 | |
| D,A | US-A-4 056 338 (EIERMANN)<br>* das ganze Dokument * *<br>– – – | 2,3 | |
| A | FR-A-2 231 245 (NISSAN MOTOR CO. LTD.)<br>* Ansprüche 1,2; Abbildungen 3,6,8 * *<br>– – – | 2-4 | |
| A | US-A-4 222 720 (SHIMIZU ET AL.)<br>– – – | | |
| A | US-A-4 403 930 (KODAMA)<br>– – – | | |
| A | GB-A-2 194 591 (WANKEL GMBH)<br>– – – – – | | |

| | | | RECHERCHIERTE SACHGEBIETE (Int. Cl.5) |
|---|---|---|---|
| | | | F 01 C |

Der vorliegende Recherchenbericht wurde für alle Patentansprüche erstellt

| Recherchenort | Abschlußdatum der Recherche | Prüfer |
|---|---|---|
| Den Haag | 16 Oktober 91 | DIMITROULAS P. |